# EUROPEAN PATENT SPECIFICATION

(11) **EP 2 346 731 B1**
(45) Date of publication and mention of the grant of the patent: **16.01.2013**
(21) Application number: 08875330.6
(22) Date of filing: 18.11.2008
(51) Int. Cl.: B62H 1/04

(54) **A CENTRE STAND ACTUATOR KIT FOR A LIGHTWEIGHT MOTORCYCLE**
MITTELSTÄNDERBETÄTIGUNGSAUSRÜSTUNG FÜR EIN LEICHTMOTORRAD
ENSEMBLE ACTIONNEUR DE BEQUILLE CENTRALE POUR MOTOCYCLE LEGER

(43) Date of publication of application: 27.07.2011
(73) Proprietor: Aktiebolaget SKF, 41 550 Göteborg (SE)
(72) Inventor: KANGLE, Sanjay, Pune 411029 (IN); DE BERNARDI, Alberto, I-10153 Torino (IT); GALLUCCI, Francesco, I-10040 Volvera (torino) (IT)
(74) Representative: Fioravanti, Corrado
(86) International application number: PCT/EP2008/065750
(87) International publication number: WO 2010/057519

(56) References cited:
- US-A- 4 223 906

## Description

The present invention relates to a centre stand and actuator kit for lightweight motorcycles, particularly scooters.

In parking a motorcycle, a centre stand is of primary importance since it offers a more stable two-point surface contact than a side stand, but can be difficult to operate. The rider has press the centre stand against the ground while rocking the motorcycle backwardly, using the stand as a fulcrum. This involves strength not possessed by all riders, especially women and elderly people. Also, the rider must get off the motorcycle in order to engage the centre stand. In view of these drawbacks, many riders prefer using the easily engaged, less stable side stand. Also, when using the side stand instead of the centre stand, more space is occupied by the scooter because of its tilting. It is therefore possible to park more scooters using a centre stand.

EP 1 254 829 A1 discloses a hydraulic actuator device for the centre stand of a motorcycle.

US 4 223 906 A discloses a device having the features of the preamble of claim 1.

It is a general object of this invention to provide a reliable and safe motorcycle stand actuator being particularly adapted for a lightweight motorcycle, particularly a scooter. Another object is to provide a light and compact stand actuator kit.

These and other objects and advantages, which will be better understood hereinafter, are achieved according to the present invention by the provision of a kit as defined in the appended claims.

In order that the present invention may be well understood there will now be described a preferred embodiment thereof, given by way of example, reference being made to the accompanying drawings, in which:
- FIG. 1: is a side view of a scooter fitted with a centre stand actuator kit according to the present invention;
- FIG. 2: is an enlarged bottom view as indicated by arrows II-II in FIG. 1;
- FIG. 3: is a view, to an enlarged scale, of a detail of the kit of this invention shown in FIG. 1; and
- FIGs. 4 and 5: are perspective views of the kit of FIG. 3 in two different arrangements.

With reference to the drawings, a preferred embodiment of a centre stand and actuator kit 10 in accordance with the invention is mounted to a lightweight motorcycle M, particularly a scooter. The kit 10 includes an electromechanical actuator 20 applied to a centre stand 28 rotatable about a transversal horizontal axis. The actuator 20 is driven by an associated reversible DC electric motor 21 powered directly by the motorcycle battery (not shown). The actuator comprises a cylinder 22 and a piston (not shown) with a stem 24. Cylinder 22 is pivotally attached to an axis on the motorcycle frame by means of a plain bearing or, in the preferred embodiment, a spherical joint 23.

By means of a threaded peg 26, the stem 24 is pivotally attached to a lug 25 of a bracket 29 fixed as a crossbar to the two legs 27 of the centre stand 28. The stand is rotatably mounted to the main frame of the motorcycle. Ground-contacting feet 30 are mounted at the lower ends of the legs 27 by threaded couplings, so as to adjust the overall length of the stand according to the rider's requirement. As used herein, terms and expressions indicating positions and orientations, such as "upper", "lower", will be construed with respect to the actuator as it would appear when mounted under a motorcycle. Such terms are used merely for convenience, and are not intended in a limiting sense.

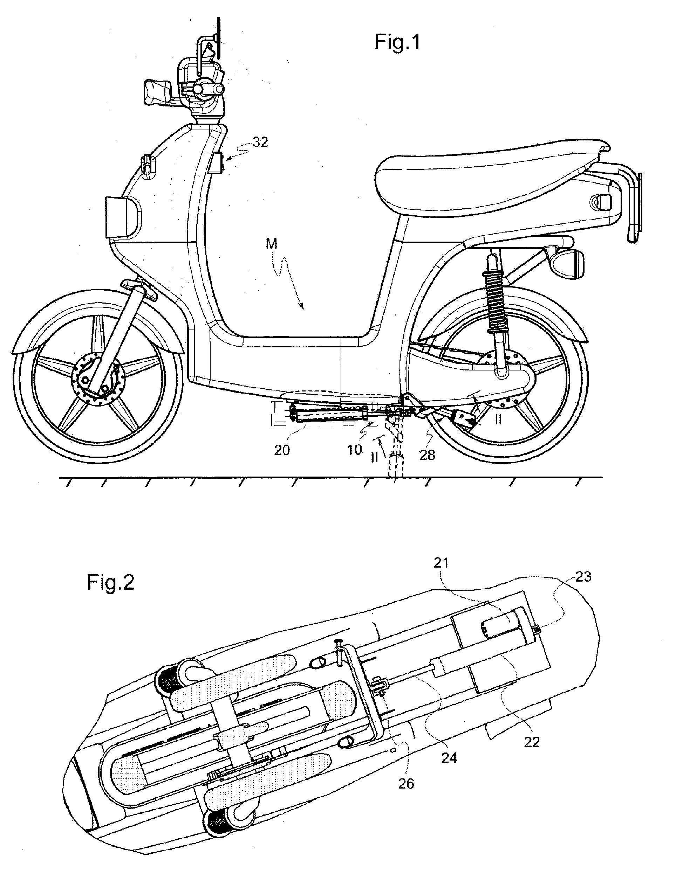

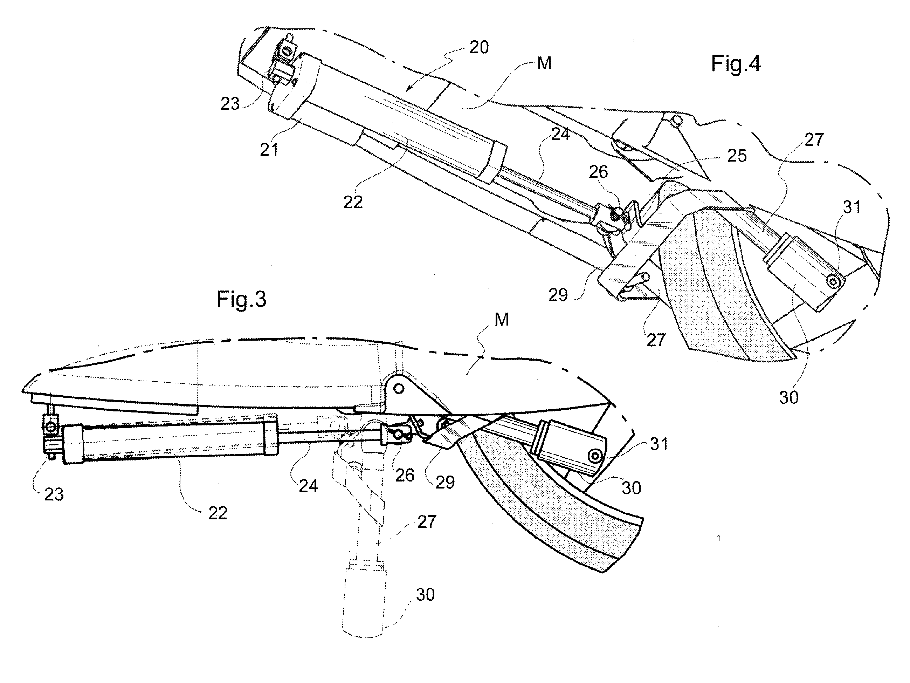

For lowering and raising the stand between a raised, travelling position and a ground contactable position, the driver needs to press corresponding controls 32 (FIG.1) located on the dashboard or elsewhere near the handlebar of the motorcycle. Extension of stem 24 will raise the stand from ground surface contact to a retracted, travelling position. Conversely, retraction of the stem will lower the stand by rotating it forwardly, bringing the feet 30 in contact with the ground. As shown in phantom in FIG.3, continued actuation of actuator 20 towards the fully retracted position of the stem will raise the rear wheel of the motorcycle off the ground. Microswitches (not shown) are provided to cut-off the current to motor 21 upon detecting full retraction or extension of the piston of actuator 20.

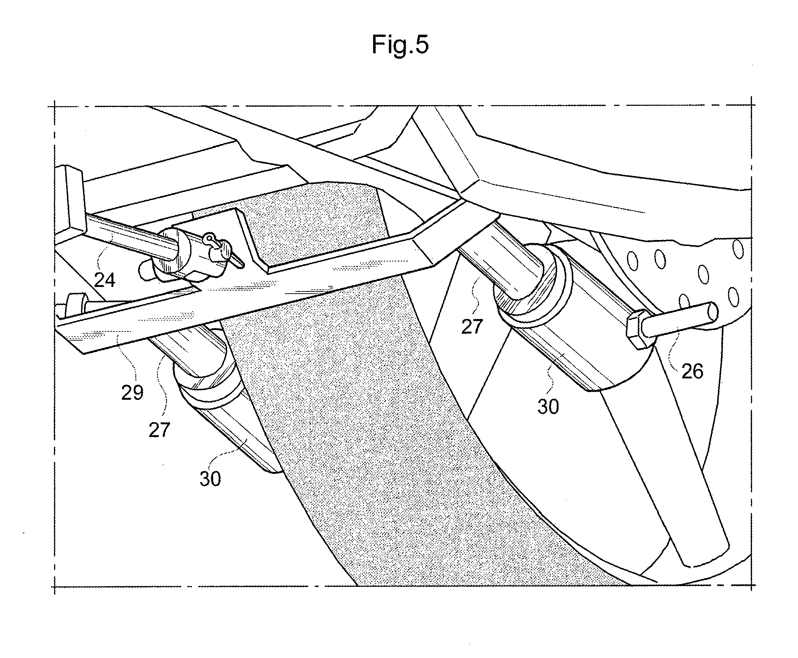

Should a failure occur in the electrical supply, the stand can be operated manually, by removing the threaded peg 26 from its normal position (shown in FIG. 4) so as to disconnect the stand from the actuator, and placing the same pin in a threaded seat 31 formed on a side surface of the stand in such manner that the pin will project sideways (FIG. 5) in order to be engaged by the rider's foot to rotate the stand between the retracted position and the ground contacting position. Preferably the threaded seat 31 is provided either on one or both the right and left ground-contacting feet 30.

Operation of the actuator is controlled by the position of the ignition key or switch. A safety factor is provided in assuring that the actuator cannot be operated while the scooter is still travelling, whereby the stand will remain in the retracted state the scooter has come to a stop. Additionally, the actuator and/or the stand is connected to engine power take-off means so that the engine cannot be switched on until the stand is in its raised position. A warning light on the dashboard informs the rider about the raised position of the stand. Furthermore, the scooter may comprise linkage means connecting the stand or the actuator to engine power take-off means. Particularly, the electric circuitry may allow electric motor energization while the scooter transmission is in the "neutral" position. Safety interlocks can be provided to disable the circuit if the motorcycle gears are engaged.

Finally, it will be appreciated that with a lightweight motorcycle such as a scooter, an electromechanical actuator is advantageous being light, cheap and simpler as compared to a hydraulic actuator, since it does not require a hydraulic circuit.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. The scope of the invention is to be limited only by the appended claims.

## Claims

1. A centre stand actuator kit for a lightweight motorcycle, particularly a scooter, the kit (10) comprising:
a bracket member (29) rigidly fixable to a centre stand unit (28), the stand unit having a first end adapted to be pivotally attached to an axis on a frame of a motorcycle, the stand unit being rotatable thereabout between a lifted travelling position and a lowered ground contacting position,
actuator means (20) for rotating the stand unit between said lifted and lowered positions, the actuator means including a first actuator member (22) adapted to be pivotally attached to the motorcycle frame and a second actuator member (24) slidingly coupled to the first actuator member (22) and pivotally attachable to the bracket member (29), **characterized in that**:
the second actuator member (24) is removably attachable to the bracket member by a peg (26) having a coupling portion for coupling alternatively
either to the second actuator member (24) and the bracket (29), to ensure connection therebetween in order to actuate the stand through said actuator means (20),
or to a corresponding seat (31) for the peg (26), the seat (31) being securable or secured on a side of the centre stand unit (28) in order to actuate the stand by foot with the peg projecting sideways from the stand.

2. A kit according to claim 1, wherein the stand unit (28) comprises ground engaging feet (30), and the said seat (31) is located on at least one ground engaging foot (30).

3. A kit according to claim 1 or 2, wherein the stand unit comprises ground engaging feet (30) adjustably mounted at the lower ends of the stand (28) by threaded couplings, so as to adjust the overall length of the stand.

4. A kit according to any one of the preceding claims, wherein the actuator means include an electromechanical actuator (20).

5. A kit according to any one of the preceding claims, wherein the coupling portion of the peg (26) is a threaded portion, and said seat (31) is a correspondingly threaded seat.

6. A lightweight motorcycle, particularly a scooter, including a centre stand actuator kit (10) according to any one of the preceding claims.

## Patentansprüche

1. Mittelständerbetätigungsausrüstung für ein Leichtmotorrad, insbesondere für einen Motorroller, wobei die Ausrüstung (10) Folgendes aufweist:
ein Klammerelement (29), das starr an einer Mittenständereinheit (28) befestigt werden kann, wobei die Ständereinheit ein erstes Ende hat, das angepasst ist, um schwenkend an einer Achse auf einer Karosserie eines Motorrads befestigt zu werden, wobei die Ständereinheit darum zwischen einer gehobenen Fahrposition und einer gesenkten Bodenkontaktposition drehbar ist,
Betätigungsmittel (20) zum Drehen der Ständereinheit zwischen der gehobenen und der gesenkten Position, wobei die Betätigungsmittel ein erstes Betätigungselement (22) aufweisen, das angepasst ist, um schwenkend an der Motorradkarosserie befestigt zu werden, und ein zweites Betätigungselement (24), das gleitend mit dem ersten Betätigungselement (22) gekoppelt und an dem Klammerelement (29) schwenkend befestigbar ist, **dadurch gekennzeichnet, dass**:
das zweite Betätigungselement (24) abnehmbar an dem Klammerelement durch einen Zapfen (26) befestigt werden kann, der einen Verbindungsabschnitt aufweist, um alternativ
entweder mit dem zweiten Betätigungselement (24) und der Klammer (29) zu koppeln, um die Verbindung dazwischen sicherzustellen, um den Ständer durch das Betätigungsmittel (20) zu betätigen,
oder mit einem entsprechenden Sitz (31) für den Zapfen (26), wobei der Sitz (31) auf einer Seite der Mittenständereinheit (28) absicherbar ist oder abgesichert wird, um den Ständer mit dem Fuß mit dem seitlich von dem Ständer wegstehenden Zapfen zu betätigen.

2. Ausrüstung nach Anspruch 1, wobei die Ständereinheit (28) Bodeneingriffsfüße (30) aufweist, und wobei der Sitz (31) auf mindestens einem Bodeneingriffsfuß (30) liegt.

3. Ausrüstung nach Anspruch 1 oder 2, wobei die Ständereinheit Bodeneingriffsfüße (30) aufweist, die an den unteren Enden des Ständers (28) durch Gewindeverbindungen einstellbar montiert sind, um die Gesamtlänge des Ständers einzustellen.

4. Ausrüstung nach einem der vorhergehenden Ansprüche, wobei die Betätigungsmittel ein elektromechanisches Betätigungsmittel (20) aufweisen.

5. Ausrüstung nach einem der vorhergehenden Ansprüche, wobei der Verbindungsabschnitt des Zapfens (26) ein Gewindeabschnitt ist und wobei der Sitz (31) ein Sitz mit entsprechendem Gewindeschnitt ist.

6. Leichtmotorrad, insbesondere Motorroller, der eine Mittelständerbetätigungsausrüstung (10) nach einem der vorhergehenden Ansprüche aufweist.

## Revendications

1. Ensemble actionneur de béquille centrale pour un motocycle léger, en particulier pour un scooter, l'ensemble (10) comprenant :
un organe support (29) pouvant être fixé de manière rigide à une unité de béquille centrale (28), l'unité de béquille ayant une première extrémité conçue pour être attachée de manière pivotante à un axe sur un cadre de motocycle, l'unité de béquille étant rotative autour de cet axe entre une position relevée de déplacement et une position abaissée de contact avec le sol,
des moyens d'actionnement (20) pour faire tourner l'unité de béquille entre lesdites positions relevée et abaissée, les moyens d'actionnement comportant un premier organe actionneur (22) conçu pour être attaché de manière pivotante au cadre de motocycle et un deuxième organe actionneur (24) accouplé de manière coulissante au premier organe actionneur (22) et pouvant être attaché de manière pivotante à l'organe support (29), caractérisé en ce qui :
le deuxième organe actionneur (24) peut être attaché de manière amovible à l'organe support par une goupille (26) ayant une partie d'accouplement pour s'accoupler alternativement
soit au deuxième organe actionneur (24) et au support (29) pour assurer la liaison entre ceux-ci afin d'actionner la béquille au moyen desdits moyens d'actionnement (20),
soit à un logement correspondant (31) pour la goupille (26), le logement (31) pouvant être fixé ou étant fixé sur un côté de l'unité de béquille centrale (28) afin d'actionner la béquille au pied avec la goupille faisant saillie latéralement hors de la béquille.

2. Ensemble selon la revendication 1, dans lequel l'unité de béquille (28) comprend des pieds (30) d'engagement avec le sol et ledit logement (31) est situé sur au moins un pied (30) d'engagement avec le sol.

3. Ensemble selon la revendication 1 ou 2, dans lequel l'unité de béquille comprend des pieds (30) d'engagement avec le sol montés de manière ajustable aux extrémités inférieures de la béquille (28) par des accouplements filetés, de manière à ajuster la longueur totale de la béquille.

4. Ensemble selon l'une quelconque des revendications précédentes, dans lequel les moyens d'actionnement comportent un actionneur électromécanique (20).

5. Ensemble selon l'une quelconque des revendications précédentes, dans lequel la partie d'accouplement de la goupille (26) est une partie filetée et ledit logement (31) est un logement fileté de manière correspondante.

6. Motocycle léger, en particulier scooter, comportant un ensemble actionneur de béquille centrale (10) selon l'une quelconque des revendications précédentes.
